# EUROPEAN PATENT APPLICATION

(11) **EP 4 286 199 A1**
(43) Date of publication of application: **06.12.2023**
(21) Application number: 22745216.6
(22) Date of filing: 25.01.2022
(51) Int. Cl.: B60K 17/16, B62D 63/02

(54) **DIFFERENTIAL DRIVE DEVICE AND AUTOMATED GUIDED VEHICLE**

(30) Priority: 27.01.2021 CN 202120234342 U
(71) Applicant: Hangzhou Hikrobot Co., Ltd., Hangzhou, Zhejiang 310051 (CN)
(72) Inventor: ZHAO, Jiaxuan, Hangzhou, Zhejiang 310051 (CN)
(74) Representative: Epping - Hermann - Fischer
(86) International application number: PCT/CN2022/073690
(87) International publication number: WO 2022/161341

(57) **Abstract**

A differential drive device and an automated guided vehicle are provided. The differential drive device comprising: an elastic suspension assembly provided with a lower connecting plate (3), wherein an elastic connector is provided on the lower connecting plate (3), and is configured to be connected to a carried module so as to form an elastic connection between the lower connecting plate (3) and the carried module; a differential drive assembly, which is provided below the elastic suspension assembly, and is hinged with the lower connecting plate (3), facilitating the improvement of the travelling stability of the automated guided vehicle.

## Description

The present application claims the priority to a Chinese patent application No. 202120234342.5 filed with the China National Intellectual Property Administration on January 27, 2021 and entitled "DIFFERENTIAL DRIVE DEVICE AND AUTOMATED GUIDED VEHICLE", which is incorporated herein by reference in its entirety.

### Technical field

The present disclosure relates to the technical field of vehicles, and, in particular, to a differential drive device as well as an automatic guided vehicle.

### Background

Automated guided vehicle (AGV) is a vehicle equipped with an automated guided device such as electromagnetic or optical device, with rechargeable batteries as the power source, capable of travelling along a prescribed guiding path. Usually, each travelling wheel of the automated guided vehicle is provided with a vibration-damping mechanism, which can reduce the noise of the automated guided vehicle when travelling on an uneven road surface, and at the same time can also regulate the wheel pressure of the automated guided vehicle when travelling on the uneven road surface.

The inventor has found that in the related art, the vibration-damping mechanism of the automated guided vehicle is not reasonably structured on the vehicle, which leads to the occurrence of conditions such as the deviation in the transport route of the automated guided vehicle when passing through a concave ground.

### Summary

The differential drive device and the automated guided vehicle provided by the present disclosure can always keep equal pressures of wheels on both sides, which is beneficial to avoid a deviation of the automated guided vehicle.

In a first aspect, the present disclosure provides a differential drive device including:
an elastic suspension assembly provided with a lower connecting plate, wherein an elastic connector is provided on the lower connecting plate, and is configured to be connected to a carried module so as to form an elastic connection between the lower connecting plate and the carried module;
a differential drive assembly, which is provided below the elastic suspension assembly, and is hinged with the lower connecting plate.

In some embodiments of the present disclosure, the elastic connector includes a plurality of springs.

In some embodiments of the present disclosure, a plurality of linear bearings are provided on the lower connecting plate, and each of the linear bearings is in axial sliding engagement with one guiding shaft configured to be connected to the carried module. Alternatively, a limiting block is provided at a lower portion of the guiding shaft.

In some embodiments of the present disclosure, a slewing support assembly is provided on the lower connecting plate, and is hinged with the differential drive assembly.

In some embodiments of the present disclosure, a slewing support assembly is provided on the differential drive assembly, and is hinged with the lower connecting plate.

In some embodiments of the present disclosure, an angle detector is further included;
wherein the angle detector includes a fixed portion and a rotating portion; one of the fixed portion and the rotating portion is fixedly connected to the differential drive assembly, and the other one of the fixed portion and the rotating portion is connected to the lower connecting plate by a connecting shaft.

In some embodiments of the present disclosure, the differential drive assembly includes:
a mounting plate hinged with the lower connecting plate;
two transmission mechanisms respectively provided on two opposite sides of the mounting plate;
a drive mechanism connected to input shafts of the two transmission mechanisms;
two travelling wheels respectively connected to output shafts of the two transmission mechanisms.

In some embodiments of the present disclosure, a hinge seat extending downward is provided on the lower connecting plate;
a through hole for passage of the hinge seat is provided in the mounting plate, and a hinge lug is provided at a lower surface of the mounting plate; the hinge seat is hinged with the hinge lug through the through hole.

In a second aspect, the present disclosure provides an automated guided vehicle including:
the differential drive device as described above;
a vehicle frame connected to the elastic connector as the carried module.

The differential drive device provided in the present disclosure elastically connects a carried module (e.g., a vehicle frame body) with a lower connecting plate via an elastic suspension assembly and hinges the elastic suspension assembly with a differential drive assembly, to dampen vibrations and adjust the pressures of wheels of the whole differential drive mechanism, which in turn is beneficial to improving the travelling stability of the automated guided vehicle. When the automated guided vehicle travels on an uneven road surface, for example, when the automated guided vehicle travels with a wheel at one side located on a depressed road surface and a wheel at the other side located on a flat road, due to the elastic suspension assembly between the automated guided vehicle and the lower connecting plate, a reaction force on the elastic connector causes the lower connecting plate to apply pressures to both sides of the differential drive mechanism at the same time, and thus, the travelling wheels on both sides of the vehicle can contact the road surface at the same time. Moreover, the lower connecting plate and the differential drive mechanism are hinged, therefore, under the action of the hinged point, the contact pressures of the travelling wheels on both sides of the automated guided vehicle relative to the ground will be automatically adjusted, and finally the travelling wheels on both sides will maintain the same wheel pressure, which is beneficial to avoid the deviation in the route of the automated guided vehicle.

### Brief Description of the Drawings

In order to more clearly illustrate the technical solutions of the embodiments of the present disclosure and the related technology, the accompanying drawings to be used in the embodiments and the related technology are briefly described below, and it is obvious that the accompanying drawings in the following description are only some embodiments of the present disclosure, and other embodiments can be obtained according to these drawings for those ordinary skilled in the art.
FIG. 1 shows a schematic diagram of a differential drive device of an embodiment of the present disclosure;
FIG. 2 shows a sectional view of a differential drive device of another embodiment of the present disclosure, taken along two guiding shaft axes;

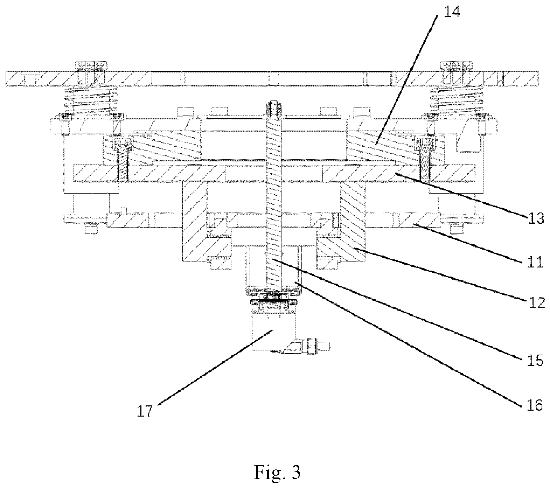

FIG. 3 shows a sectional view of a differential drive device of an embodiment of the present disclosure, taken along the connecting shaft of the angle detector.

The reference signs are used as follows:
1-upper connecting plate; 2-spring; 3-lower connecting plate; 4-linear bearing; 5-guiding shaft; 6-cushion; 7-limiting block; 8-travelling wheel; 10-differential drive mechanism; 12-hinge seat; 13-slewing bearing mounting plate; 14-slewing bearing; 15-connecting shaft; 16-angle detector bracket; 17-angle detector.

### Detailed Description

In order to make the purpose, technical solutions and advantages of the embodiments of the present disclosure clearer, the technical solutions in the embodiments of the present disclosure will be described clearly and completely in the following in conjunction with the accompanying drawings in the embodiments of the present disclosure, and obviously, the described embodiments are only a part of the embodiments of the present disclosure, and not all of them. Based on the embodiments in the present disclosure, all other embodiments obtained by those ordinary skilled in the art without any creative effort fall within the protection scope of the present disclosure.

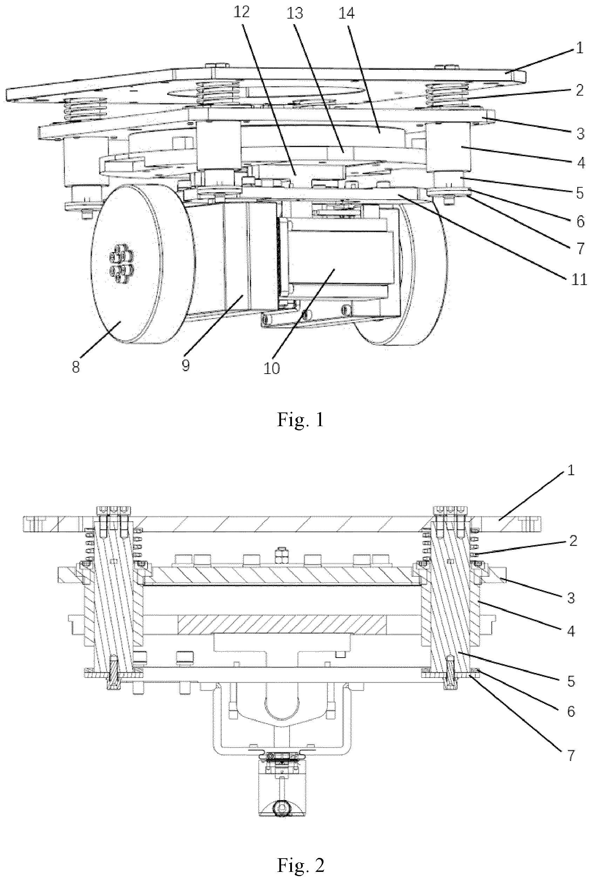

A first aspect of the present disclosure provides a differential drive device, as shown with reference to FIGS. 1 and 2, wherein the differential drive device includes an elastic suspension assembly and a differential drive assembly. The elastic suspension assembly is provided with a lower connecting plate. An elastic connector is provided on the lower connecting plate, and is configured to be connected to a carried module so as to form an elastic connection between the lower connecting plate and the carried module. The differential drive assembly is provided below the elastic suspension assembly, and is hinged with the lower connecting plate, allowing the differential drive assembly to swing left and right on an uneven road surface to adapt to the road surface.

In some embodiments, the carried part usually refers to a body of a vehicle that is towed, and in order to facilitate the connection of the differential drive device to the body of the vehicle, the differential drive device is usually provided with an upper connecting plate 1. However, those skilled in the art should note that the upper connecting plate 1 is not indispensable, and that the elastic connector can also be connected directly to the body of the vehicle. In the following embodiments, both the connection method between the upper connecting plate 1 and the lower connecting plate, as well as the connection method between the upper connecting plate 1 and the elastic connector can be applied to the connection method between the vehicle frame and the elastic connector as well as the connection method between the vehicle frame and the lower connecting plate. As illustrated below in the example of the connection method with the upper connecting plate 1, the upper connecting plate 1 should be used for connecting the vehicle frame of the body of the vehicle, and the lower connecting plate 3 is used for connecting the differential drive assembly. A hinge seat 12 is provided on the differential drive assembly, and the lower connecting plate 3 is hinged with the differential drive assembly via the hinge seat 12. Typically, the differential drive assembly provides a traction force, which is then transmitted to the vehicle frame via the lower connecting plate 3 and the upper connecting plate 1. Those skilled in the art should note that there may also be a mechanism for transmitting the traction force between the upper connecting plate 1 and the lower connecting plate 3, but this mechanism for transmitting the traction force should not have an effect on the elastic connection between the upper connecting plate 1 and the lower connecting plate 3. For example, a shaft slidingly connected to the upper connecting plate 1 or the lower connecting plate 3 may be provided, and the traction force is transmitted by means of the shearing forces of the upper connecting plate 1 and the lower connecting plate 3 on this shaft. The elastic connector may be a spring, rubber or other component having elasticity, which is not limited in the embodiments of the present disclosure.

An elastic connection between the upper connecting plate 1 and the lower connecting plate 3 are adopted by the differential drive device provided in the present disclosure embodiment to dampen vibrations and adjust the pressures of wheels of the whole differential drive mechanism 10, which in turn is beneficial to improving the travelling stability of the automated guided vehicle. When the automated guided vehicle travels on an uneven road surface, for example, when the automated guided vehicle travels with a wheel at one side of the automated guided vehicle located on a depressed road surface and a wheel at the other side located on a flat road, due to the elastic suspension assembly between the automated guided vehicle and the lower connecting plate, a reaction force on the elastic connector causes the lower connecting plate 3 to apply pressures to both sides of the differential drive mechanism 10 at the same time, and thus, the travelling wheels 8 on both sides of the vehicle can contact the road surface at the same time. Moreover, the lower connecting plate 3 and the differential drive mechanism 10 are hinged, therefore, under the action of the hinge seat 12, the contact pressures of the travelling wheels 8 on both sides of the automated guided vehicle relative to the ground will be automatically adjusted, and finally the travelling wheels 8 on both sides will maintain the same wheel pressure, which is beneficial to avoid the deviation in the route of the automated guided vehicle.

In some embodiments of the present disclosure, a plurality of springs 2 are provided between the upper connecting plate 1 and the lower connecting plate 3. The plurality of springs 2 are provided between the upper connecting plate 1 and the lower connecting plate 3 to achieve an elastic connection between the upper connecting plate 1 and the lower connecting plate 3 with the elastic force provided by the springs 2. In some embodiments of the present disclosure, the plurality of springs 2 are uniformly distributed between the upper connecting plate 1 and the lower connecting plate 3, so that the elastic force between the upper connecting plate 1 and the lower connecting plate 3 is evenly distributed, which is more favorable to the balance of the differential drive device. In some other embodiments of the present disclosure, the plurality of springs 2 between the upper connecting plate 1 and the lower connecting plate 3 are distributed in a symmetrical manner, for example, four springs 2 may be respectively arranged at four corners of the upper connecting plate 1 and the lower connecting plate 3. An example in which the spring is provided between the upper connecting plate and the lower connecting plate is taken in the description above, and those skilled in the art should note that the above-described connection method may also be applied to the case where the spring is provided between the vehicle frame and the lower connecting plate.

In some embodiments of the present disclosure, a plurality of guiding shafts 5 are provided on the upper connecting plate 1 connected to the carried module. A plurality of linear bearings 4 are provided on the lower connecting plate 3, and are in axial sliding engagement with the guiding shafts 5. The plurality of guiding shafts 5 limit the directions of the upper connecting plate 1 and the lower connecting plate 3 to be parallel, thereby enabling the upper connecting plate 1 and the lower connecting plate 3 as a whole to apply a force to the differential drive mechanism 10, and then, through the hinge connection of the lower connecting plate 3 and the differential drive mechanism 10, the force exerted by the elastic suspension assembly acts on the whole differential drive mechanism 10, which is beneficial to keeping the wheel pressures of the travelling wheels 8 on both sides the same. At the same time, the guiding shaft 5 is provided with an additional function of transmitting the traction force from the differential drive mechanism 10 to the vehicle frame by means of the shearing action of the upper connecting plate 1 and the lower connecting plate 3 on the guiding shaft 5. In the connection method described above, the linear bearings are provided on the lower connecting plate, while the guiding shafts 5 are provided on the upper connecting plate 1, and indirectly connected to the vehicle frame through the upper connecting plate 1. However, it can be understood by those skilled in the art that the above guiding shafts 5 can also be connected directly to the vehicle frame.

In some embodiments of the present disclosure, a limiting block 7 is provided at a lower portion of the guiding shaft 5. When the road surface is too uneven, if the automated guided vehicle continues travelling, it may easily encounter a danger such as tipping over in the subsequent travelling. Alternatively, if the road surface is too uneven, the spacing between the upper connecting plate 1 and the lower connecting plate 3 may be too large so that the lower connecting plate 3 falls off from the upper connecting plate 1. In order to avoid the above situations, a limiting block 7 is provided at the lower portion of the guiding shaft 5 to limit the displacement of the guiding shaft 5, i.e. to limit the relative displacement between the upper connecting plate 1 and the lower connecting plate 3. For the different situations described above, different limiting ways can be selected. For example, in order to avoid tipping over of them, the limiting block 7 can be provided at an upper position, so that the maximum spacing between the upper connecting plate 1 and the lower connecting plate 3 is also kept within a safe spacing. For another example, in order to prevent the lower connecting plate 3 from falling off the upper connecting plate 1, the limiting block 7 can be provided at the lower end of the guiding shaft 5, which not only provides a sufficient travelling spacing for the upper connecting plate 1 and the lower connecting plate 3, but also avoids the falling off of the lower connecting plate 3. Of course, in order to avoid noise caused by a collision between the linear bearing 4 and the limiting block 7, or to avoid damage to the linear bearing 4 or the limiting block 7 due to a collision, a cushion 6 may be provided between the linear bearing 4 and the limiting block 7, and the cushion 6 may be made of an elastic material, such as resin or rubber.

In some embodiments of the present disclosure, a slewing support assembly is provided on the lower connecting plate 3, and is hinged with the differential drive assembly. In order to provide the differential drive mechanism 10 with the ability to steer, it is necessary to implement the slewing connection between the differential drive mechanism 10 and the elastic suspension mechanism. This can be achieved by means of providing the slewing support assembly on the lower connecting plate 3. The slewing support assembly may include a slewing bearing 14 and a slewing bearing mounting plate 13. The slewing bearing 14 is connected to the slewing bearing mounting plate 13 and the lower connecting plate 3, and the differential drive assembly is also connected to the slewing bearing mounting plate 13. The slewing bearing 14 may, for example, be a flat bearing or a ball bearing, and when the slewing bearing 14 is a flat bearing, the lower connecting plate 3 and the slewing bearing mounting plate 13 are connected to both surfaces of the flat bearing, respectively; and when the slewing bearing 14 is a ball bearing, the lower connecting plate 3 and the slewing bearing mounting plate 13 may be connected to the inner ring and the outer ring of the ball bearing, respectively.

In other embodiments of the present disclosure, a slewing support assembly is provided on the differential drive assembly, and is hinged with the lower connecting plate 3. This embodiment of the present disclosure is similar to the previous embodiment, with the difference that the position of the hinge connection and the position of the slewing connection are interchanged in upper and lower positions.

In some embodiments of the present disclosure, the differential drive assembly further includes an angle detector 17. The angle detector 17 includes a fixed portion and a rotating portion. One of the fixed portion and the rotating portion is fixedly connected to the differential drive assembly, and the other one of the fixed portion and the rotating portion is connected to the lower connecting plate 3 by a connecting shaft 15. In order to monitor the operation of the differential drive assembly, it is necessary to detect the slewing angle of the differential drive assembly in real time, to avoid a situation where the automated guided vehicle deviates from an established travelling path. Therefore, an angle detector 17 is provided in the present embodiment, and usually includes a fixed portion and a rotating portion, and when the fixed portion and the rotating portion are respectively connected to two components that undergo rotational movement relative to each other, the rotation of the two components drives the fixed portion and the rotating portion to rotate relative to each other, and the angle detector 17 converts the angle of rotation into an electrical signal and outputs it. In the present embodiment, one of the fixed portion or the rotating portion is connected to the differential drive assembly and the other one is connected to the lower connecting plate 3 via the connecting shaft 15, so that the relative rotation angle between the differential drive assembly and the lower connecting plate 3 can be obtained. In other embodiments of the present disclosure, an angle detector bracket 16 may be provided on the differential drive assembly to mount the fixed portion or the rotating portion of the angle detector 17.

In some embodiments of the present disclosure, the differential drive assembly includes: a mounting plate hinged with the lower connecting plate; two transmission mechanisms respectively provided on two opposite sides of the mounting plate; a drive mechanism connected to input shafts of the two transmission mechanisms; and two travelling wheels respectively connected to output shafts of the two transmission mechanisms. In some embodiments, the mounting plate serves as an frame of the overall differential drive assembly, two transmission mechanisms are provided on the left and right sides for fixed connection, the housing of the drive mechanism is fixedly connected to the housing of the transmission mechanism, the output shafts of the drive mechanism are connected to the input shafts of the two transmission mechanisms, and the two travelling wheels are respectively connected to the output shafts of the two transmission mechanisms. In some embodiments, for example, there may be two drive mechanisms, and the output shafts of the two drive mechanisms are connected to the input shafts of the two transmission mechanisms, so that the two transmission mechanisms may drive the two travelling wheels to travel at different speeds by means of different rotational speeds of the two transmission mechanisms. In other embodiments, for example, there may be one drive mechanism, and the input shafts of both transmission mechanisms are connected to the output shafts of the drive mechanisms, and the differential speed travelling of the two travelling wheels can be achieved by adjusting reduction ratios of the two transmission mechanisms. Further, in some embodiments, the drive mechanism may for example be a driving motor, and the transmission mechanism may for example be a reducer.

In some embodiments of the present disclosure, a hinge seat extending downward is provided on the lower connecting plate; a through hole for the passage of the hinge seat is provided in the mounting plate, and a hinge lug is provided at a lower surface of the mounting plate; the hinge seat is hinged with the hinge lug through the through hole. In the present embodiment, by providing the through hole in the mounting plate, the hinge seat is connected to the hinge lug on the lower surface of the mounting plate through the through hole, so that the hinge point is moved downward, which can reduce the overall height of the differential drive device, thereby being beneficial to reducing the overall height of the automated guided vehicle, and further reducing the volume of the automated guided vehicle.

A second aspect of an embodiment of the present disclosure further provides an automated guided vehicle including:
a differential drive device as described above;
a vehicle frame connected to the elastic connector as the carried module.

The automated guided vehicle provided by the embodiment of the present disclosure adopts the differential drive device described in the first aspect as a part of the vehicle. Wherein, the automated guided vehicle is connected to the lower connecting plate 3 by means of the elastic connector, which dampens vibrations and adjusts the pressures of wheels of the whole differential drive mechanism 10, which in turn is beneficial to improving the travelling stability of the automated guided vehicle. When the automated guided vehicle travels on an uneven road surface, for example, when the automated guided vehicle travels with a wheel at one side located on a depressed road surface and a wheel at the other side located on a flat road, due to the elastic suspension assembly between the automated guided vehicle and the lower connecting plate, a reaction force on the elastic connector causes the lower connecting plate 3 to apply pressures to both sides of the differential drive mechanism 10 at the same time, and thus, the travelling wheels 8 on both sides of the vehicle can contact the road surface at the same time. Moreover, the lower connecting plate 3 and the differential drive mechanism 10 are hinged, therefore, under the action of the hinge seat 12, the contact pressures of the travelling wheels 8 on both sides of the automated guided vehicle relative to the ground will be automatically adjusted, and finally the travelling wheels 8 on both sides will maintain the same wheel pressure, which is beneficial to avoid the deviation in the route of the automated guided vehicle.

The foregoing is only specific implementations of the present disclosure, but the protection scope of the present disclosure is not limited to this. Any changes or replacement that can be easily arrived at by those skilled in the art within the technical scope disclosed in the present disclosure should be covered by the protection scope of the present disclosure. Therefore, the protection scope of the present disclosure should be based on the protection scope of the claims.

## Claims

1. A differential drive device, comprising:
an elastic suspension assembly provided with a lower connecting plate, wherein an elastic connector is provided on the lower connecting plate, and is configured to be connected to a carried module so as to form an elastic connection between the lower connecting plate and the carried module;
a differential drive assembly, which is provided below the elastic suspension assembly, and is hinged with the lower connecting plate.

2. The differential drive device according to claim 1, wherein the elastic connector comprises a plurality of springs.

3. The differential drive device according to claim 1, wherein a plurality of linear bearings are provided on the lower connecting plate, and each of the linear bearings is in axial sliding engagement with one guiding shaft configured to be connected to the carried module.

4. The differential drive device according to claim 3, wherein a limiting block is provided at a lower portion of the guiding shaft.

5. The differential drive device according to claim 1, wherein a slewing support assembly is provided on the lower connecting plate, and is hinged with the differential drive assembly.

6. The differential drive device according to claim 1, wherein a slewing support assembly is provided on the differential drive assembly, and is hinged with the lower connecting plate.

7. The differential drive device according to claim 5 or 6, further comprising an angle detector;
wherein the angle detector comprises a fixed portion and a rotating portion; one of the fixed portion and the rotating portion is fixedly connected to the differential drive assembly, and the other one of the fixed portion and the rotating portion is connected to the lower connecting plate by a connecting shaft.

8. The differential drive device according to claim 1, wherein the differential drive assembly comprises:
a mounting plate hinged with the lower connecting plate;
two transmission mechanisms respectively provided on two opposite sides of the mounting plate;
a drive mechanism connected to input shafts of the two transmission mechanisms;
two travelling wheels respectively connected to output shafts of the two transmission mechanisms.

9. The differential drive device according to claim 8, wherein a hinge seat extending downward is provided on the lower connecting plate;
a through hole for passage of the hinge seat is provided in the mounting plate, and a hinge lug is provided at a lower surface of the mounting plate; the hinge seat is hinged with the hinge lug through the through hole.

10. An automated guided vehicle comprising:
the differential drive device as claimed in any one of claims 1 to 9;
a vehicle frame connected to the elastic connector as the carried module.
